# EUROPEAN PATENT SPECIFICATION

(11) **EP 3 330 166 B1**
(45) Date of publication and mention of the grant of the patent: **06.03.2019**
(21) Application number: 17204633.6
(22) Date of filing: 30.11.2017
(51) Int. Cl.: B62K 25/28, B62L 1/00, B62M 7/02, B62M 9/16, B62J 15/00, B62J 99/00, G01P 3/44, B60T 8/32, B62K 19/38, B60T 8/17

(54) **STRADDLED VEHICLE**
GRÄTSCHSITZFAHRZEUG
VÉHICULE À ENFOURCHER

(30) Priority: 05.12.2016 JP 2016235934
(43) Date of publication of application: 06.06.2018
(73) Proprietor: Yamaha Hatsudoki Kabushiki Kaisha, Iwata-shi Shizuoka 438-8501 (JP)
(72) Inventor: KIMURA, Yusuke, Iwata-shi, Shizuoka 438-8501 (JP); IMAFUKU, Yuta, Iwata-shi, Shizuoka 438-8501 (JP)
(74) Representative: Grünecker Patent- und Rechtsanwälte PartG mbB

(56) References cited:
- EP-A1- 2 749 465
- JP-A- 2007 078 549
- JP-A- 2014 213 818
- JP-A- 2016 175 592

## Description

The present invention relates to a straddled vehicle including an ABS. JP 2014-213818 A discloses all of the features of the preamble of claim 1, and is considered the closest prior art document.

EP 2889208 A1 discloses a motorcycle as an example of a straddled vehicle. The motorcycle includes a rear arm that rotatably supports the rear wheel, and a rear fender that swings up and down together with the rear wheel and the rear arm.

The rear fender of EP 2889208 A1 includes a fender main body disposed above the rear wheel, a left side guard disposed to the left of the rear wheel, and a right side guard disposed to the right of the rear wheel. A bolt that fixes the left side guard to the rear arm is inserted in holes provided in the left side guard and a bracket of the rear arm. Similarly, a bolt that fixes the right side guard to the rear arm is inserted in holes provided in the right side guard and a bracket of the rear arm.

Motorcycles equipped with ABS have been increasing in recent years. An ABS includes a wheel speed sensor that detects the rotational speeds of the front wheel and rear wheel.

When a motorcycle travels on a road surface, if the road surface is not in a good condition, gravel on the road surface may fly toward the wheel speed sensor and the gravel may contact with the wheel speed sensor. It is preferred for such contact to be avoided as much as possible.

The present inventors first investigated where the positions are that can more reliably avoid contact of gravel with the wheel speed sensor. As a result, it was concluded that it is more advantageous for the wheel speed sensor to be disposed above the swingarm, than to be disposed behind or below the swingarm. This is because if the wheel speed sensor is disposed above the swingarm, the wheel speed sensor is not only more distantly located above the road surface, but the wheel speed sensor is expected to be guarded from gravel by the swingarm.

Incidentally, in some cases a bracket extending upward from the swingarm is provided at the rear end portion of the swingarm, as in the straddled vehicle of EP 2889208 A1, for example. On the other hand, the wheel speed sensor is preferably as close to the wheel as possible. However, when the wheel speed sensor is disposed close to the wheel, tools used for attachment and removal of the wheel speed sensor may interfere with the bracket of the swingarm.

It is therefore an object of the present invention to provide a straddled vehicle wherein a wheel speed sensor of an ABS is expected to be guarded from gravel and workability to attach or detach the wheel speed sensor can be prevented from worsening. The present object is achieved by a straddled vehicle according to Claim 1. Preferred embodiments are laid down in the dependent claims.

A preferred embodiment provides a straddled vehicle including a rear wheel, a prime mover that is configured to rotate the rear wheel, a rear axle shaft that rotatably supports the rear wheel, a swingarm that includes a main arm supporting the rear axle shaft and a bracket protruding upward from the main arm, a supported body mounted on the bracket, a drive chain that is configured to transmit rotation of the prime mover to the rear wheel, a chain adjuster that is configured to adjust the drive chain tension by moving the rear axle shaft in the front-rear direction of the vehicle with respect to the swingarm among a plurality of positions including an overlapping position and a non-overlapping position, a rear brake that is configured to apply damping force to the rear wheel, an ABS which includes a rotor that is configured to rotate together with the rear wheel and a wheel speed sensor that is configured to detect a rotational speed of the rear wheel by detecting the rotational speed of the rotor, and which is configured to change the damping force of the rear brake based on the rotational speed of the rear wheel, a holder that is configured to hold the wheel speed sensor, is mounted on the rear axle shaft, and that is configured to move in the front-rear direction of the vehicle with respect to the swingarm together with the rear axle shaft, and a sensor fastening member that includes a tool-fitted portion disposed on the outer side of the wheel speed sensor in the vehicle width direction and configured to come into contact with a tool that is configured to fasten the wheel speed sensor to the holder, wherein when the rear axle shaft is at the overlapping position, the bracket of the swingarm overlaps with at least a portion of the tool-fitted portion of the sensor fastening member in a vehicle side view, and when the rear axle shaft is at the non-overlapping position, the rear axle shaft does not overlap with any portion of the tool-fitted portion of the sensor fastening member in a vehicle side view. The prime mover may be either an engine (internal combustion engine) or an electric motor.

With this arrangement, the wheel speed sensor of the ABS that detects the rotational speed of the rear wheel is fastened to the holder by the sensor fastening member. The holder moves in the front-rear direction with respect to the swingarm together with the rear axle shaft. When the rear axle shaft is moved in the front-rear direction with respect to the swingarm by the chain adjuster in order to adjust the drive chain tension, the wheel speed sensor and the sensor fastening member that are supported by the holder also move in the front-rear direction with respect to the swingarm.

When the rear axle shaft is at the overlapping position, the bracket of the swingarm overlaps with at least a portion of the tool-fitted portion of the sensor fastening member in a side view. If the sensor fastening member is hidden by the bracket, at least a portion of the wheel speed sensor is also hidden by the bracket. Gravel flying inward in the vehicle width direction toward the wheel speed sensor could be thus blocked by the bracket. Therefore, the wheel speed sensor is expected to be guarded from gravel.

On the other hand, when the rear axle shaft is at the non-overlapping position, the bracket of the swingarm does not overlap with any portion of the tool-fitted portion of the sensor fastening member in a side view. In other words, the entire tool-fitted portion of the sensor fastening member is exposed through the bracket in a side view. It is thus possible to fit a tool to rotate the sensor fastening member onto the tool-fitted portion of the sensor fastening member from the outer side in the vehicle width direction. This prevents workability to attach or detach the wheel speed sensor of the ABS from worsening.

In the present preferred embodiment, at least one of the following features may be added to the above straddled vehicle.

The sensor fastening member is a bolt including a head portion provided with the tool-fitted portion and a shaft portion extending from the head portion in the width direction of the straddled vehicle. When the rear axle shaft is at the overlapping position, the bracket of the swingarm overlaps with at least a portion of the head portion of the bolt in a vehicle side view, and when the rear axle shaft is at the non-overlapping position, the bracket of the swingarm does not overlap with any portion of the head portion of the bolt in a vehicle side view.

The sensor fastening member is a nut provided with the tool-fitted portion. When the rear axle shaft is at the overlapping position, the bracket of the swingarm overlaps with at least a portion of the nut in a vehicle side view, and when the rear axle shaft is at the non-overlapping position, the bracket of the swingarm does not overlap with any portion of the nut in a vehicle side view.

The chain adjuster includes a puller that is visible in a vehicle side view, and that is configured to move in the front-rear direction of the vehicle with respect to the swingarm together with the rear axle shaft. The swingarm includes a fixed mark that serves as reference for a position of the puller with respect to the swingarm and that is provided at a location of the swingarm where the rear axle shaft is disposed at the non-overlapping position.

With this arrangement, when the puller of the chain adjuster is moved in the front-rear direction with respect to the swingarm together with the rear axle shaft to align a reference position of the puller with the fixed mark of the swingarm, the rear axle shaft is disposed at the non-overlapping position and the entire tool-fitted portion of the sensor fastening member is exposed through the bracket of the swingarm in a side view. Thus, the tool-fitted portion of the sensor fastening member can be easily exposed through the bracket, in a side view.

The puller may be disposed on the outer side of the swingarm in the vehicle width direction, or it may be disposed on the inner side of the swingarm in the vehicle width direction. In the latter case, if a portion of the puller is disposed above or below the swingarm in a side view, the puller will be visible from the side. Alternatively, the puller may be disposed inside the swingarm. In this case, the puller may be exposed through a hole connecting the interior of the swingarm and the exterior of the swingarm.

The supported body mounted on the bracket is disposed on the outer side of the wheel speed sensor and the bracket in the vehicle width direction, and it includes a lower end portion that overlaps with the wheel speed sensor and the bracket, in a vehicle side view.

With this arrangement, the bracket of the swingarm is disposed on the outer side of the wheel speed sensor in the vehicle width direction, and the lower end portion of the supported body is disposed on the outer side of the bracket in the vehicle width direction. Thus, gravel flying inward in the vehicle width direction toward the wheel speed sensor could be blocked by the bracket and supported body. Therefore, the wheel speed sensor is expected to be guarded from gravel.

The supported body may be a rear fender, rear suspension, hose (such as a brake hose) or wiring, or two or more of these, or any other supported body. When the supported body is a rear suspension, the upper end portion of the rear suspension is connected to a frame of the straddled vehicle, and the lower end portion of the rear suspension is connected to the bracket. When the supported body is a rear fender, the rear fender may include a fender portion disposed above the rear wheel, and a pair of left and right arm portions extending downward from the fender portion.

The bracket includes a penetrating portion that penetrates the bracket in the vehicle width direction, and two base portions on which the supported body is mounted and disposed in front of and behind the penetrating portion, respectively. When the rear axle shaft is at the overlapping position, one of the two base portions overlaps with at least a portion of the tool-fitted portion of the sensor fastening member in a vehicle side view. When the rear axle shaft is in the non-overlapping position, the penetrating portion overlaps with any portion of the tool-fitted portion of the sensor fastening member, in a vehicle side view.

With this arrangement, the supported body is mounted on the two base portions provided on the bracket of the swingarm. When the rear axle shaft is at the overlapping position, the base portions of the bracket overlap with at least a portion of the tool-fitted portion of the sensor fastening member in a side view. On the other hand, when the rear axle shaft is at the non-overlapping position, the entire tool-fitted portion of the sensor fastening member is disposed in the penetrating portion of the bracket, i.e. in the space penetrating the bracket in the vehicle width direction in a side view. This allows the sensor fastening member to be exposed through the bracket in a side view.

The penetrating portion of the bracket is a notch opening upward in a vehicle side view.

With this arrangement, the bracket of the swingarm defines a notch penetrating the bracket in the vehicle width direction and opening upward in a side view. When the penetrating portion of the bracket is a through-hole that is closed over its entire circumference, a portion of the bracket is disposed above the through-hole. When a tool is fitted onto the tool-fitted portion and removed from the tool-fitted portion, this portion can interfere with the tool. Therefore, the workability to attach or detach the wheel speed sensor can be improved.

The wheel speed sensor includes a sensor head that protrudes inward from the holder in the vehicle width direction, and that faces the rotor, the sensor head being disposed behind the holder and overlapping with the holder when the wheel speed sensor is viewed from behind.

With this arrangement, the sensor head of the wheel speed sensor and the side surface of the rotor are facing each other. The sensor head is disposed behind the holder and overlaps with the holder when the wheel speed sensor is viewed from behind. Gravel flying back toward the sensor head could be blocked by the holder. Therefore, the wheel speed sensor is expected to be guarded from gravel.

The rear wheel includes a wheel and a tire, the wheel including a cylindrical hub on which the rear axle shaft is mounted, an annular rim on which the tire is mounted and a plurality of spokes extending from the hub to the rim, and the wheel speed sensor includes a sensor head that protrudes inward from the holder in the vehicle width direction, and that faces the rotor, the sensor head being disposed above the hub and overlapping with the hub when the wheel speed sensor is viewed from above.

With this arrangement, the sensor head of the wheel speed sensor is disposed above the hub which corresponds to the central portion of the wheel of the rear wheel, and it overlaps with the hub when the wheel speed sensor is viewed from above. Gravel flying upward toward the sensor head could be blocked by the hub of the wheel. Therefore, the wheel speed sensor is expected to be guarded from gravel.

The rear brake is a disk brake including a brake disc that is configured to rotate together with the rear wheel, a brake pad that is pressed against the brake disc, and a brake caliper that is configured to hold the brake pad, and the holder includes a sensor holding portion that is configured to hold the wheel speed sensor and a caliper holding portion that is configured to hold the brake caliper. The rotor of the ABS may have an outer diameter that is smaller than the outer diameter of the brake disc.

With this arrangement, the holder holds the brake caliper in addition to the wheel speed sensor. Therefore, it is not necessary to provide separate holders to hold the wheel speed sensor and brake caliper. This will allow the straddled vehicle to be more lightweight, and can improve workability to produce the straddled vehicle.

The wheel speed sensor and the sensor fastening member are disposed on a side opposite to the drive chain with respect to the rear wheel.

With this arrangement, gravel flying from the drive chain toward the wheel speed sensor when the straddled vehicle is traveling could be blocked by the rear wheel, and therefore the wheel speed sensor is expected be guarded from gravel. In addition, since the sensor fastening member and drive chain are disposed on mutually opposite sides of the rear wheel, the drive chain does not interfere with tools when the tools are fitted onto the sensor fastening member.

The swingarm may be a double-sided swingarm including a pair of main arms disposed on the right and left sides of the rear wheel, respectively, or it may be a single-sided swingarm including a main arm disposed on the right or left side of the rear wheel.

The above and other elements, features, steps, characteristics, and advantages of the present invention will become more apparent from the following detailed description of the preferred embodiments with reference to the attached drawings.

### BRIEF DESCRIPTION OF THE DRAWINGS

Fig. 1 is a right side view of a motorcycle according to a first preferred embodiment.
Fig. 2 is an enlarged view showing the right side surface of a swingarm on which a rear fender has been mounted.
Fig. 3 is an enlarged view showing the right side surface of a swingarm from which a rear fender has been removed.
Fig. 4 is a conceptual drawing for illustration of an ABS.
Fig. 5 is a right side view showing a swingarm, a rear brake and a rear pulse generator.
Fig. 6 is a plan view showing a swingarm, a rear brake and a rear pulse generator.
Fig. 7 is a rear view showing a swingarm, a rear brake and a rear pulse generator.
Fig. 8 is a cross-sectional view showing a cross-section along line VIII-VIII in Fig. 5.
Fig. 9A is a right side view showing the positional relationship between the right bracket and the sensor bolt, and shows a state in which the rear axle shaft is at the overlapping position.
Fig. 9B is a right side view showing the positional relationship between the right bracket and the sensor bolt, and shows a state in which the rear axle shaft is at the non-overlapping position.
Fig. 10 is a right side view showing a swingarm, rear brake and rear pulse generator according to a second preferred embodiment, and shows a state in which the rear axle shaft is at the overlapping position.
Fig. 11 is a right side view showing a swingarm, rear brake and rear pulse generator according to a second preferred embodiment, and shows a state in which the rear axle shaft is at the non-overlapping position.
Fig. 12 is a right side view showing a swingarm according to a third preferred embodiment.
FIG. 13 is a right side view showing the positional relationship between the right bracket and the sensor bolt according to a fourth preferred embodiment, and shows a state in which the rear axle shaft is at the non-overlapping position.
FIG. 14 is a right side view showing the positional relationship between the right bracket and the sensor bolt according to a fifth preferred embodiment, and shows a state in which the rear axle shaft is at the non-overlapping position.
FIG. 15 is a cross-sectional view showing horizontal cross-sections of the swing arm, the rear brake and the rear pulse generator according to a sixth preferred embodiment.
FIG. 16 is a right side view showing the positional relationship between the right bracket and the sensor bolt according to the sixth preferred embodiment, and shows a state in which the rear axle shaft is at the non-overlapping position.

### DETAILED DESCRIPTION OF PREFERRED EMBODIMENTS

Front-rear, up-down, and right-left directions are defined on the basis of a viewpoint of a forward-facing rider who sits on a motorcycle 1 in a reference posture in which the motorcycle 1 travels straight ahead on a horizontal plane (in which a steering handle 10 is disposed at a straight-traveling position). The right-left direction corresponds to a vehicle width direction (a width direction of the motorcycle 1). A vehicle center corresponds to a vertical plane that passes through a center line of a head pipe 3 and that is perpendicular to a rotational center of a rear wheel 5. The motorcycle 1 in the reference posture will be hereinafter described unless specific notice is given. A front view, a side view, a plan view and a rear view mean a front view, a side view, a plan view and a rear view of the motorcycle 1, respectively unless specific notice is given.

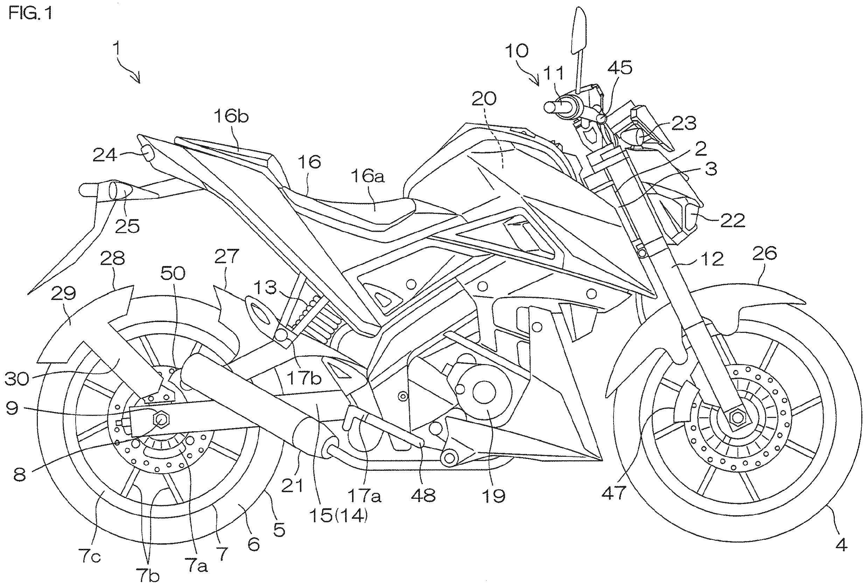

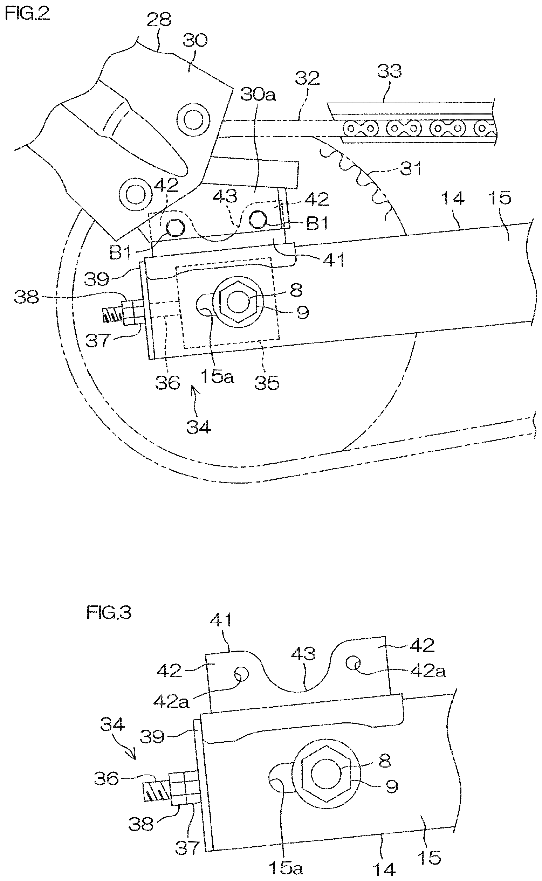

Fig. 1 is a right side view of a motorcycle 1 according to a first preferred embodiment. Fig. 2 is an enlarged view showing the right side surface of a swingarm 14 on which a rear fender 28 has been mounted. Fig. 3 is an enlarged view showing the right side surface of a swingarm 14 from which a rear fender 28 has been removed.

As shown in Fig. 1, the motorcycle 1 as an example of a straddled vehicle includes a frame 2 covered by an exterior cover, a front wheel 4 connected to the frame 2 via a front fork 12, and a rear wheel 5 connected to the frame 2 via the swingarm 14.

The frame 2 includes a head pipe 3 extending obliquely rearward and upward. The frame 2 also includes a pair of left and right main frames extending rearward and downward from the head pipe 3, and a pair of left and right sheet frames extending rearward from the pair of main frames. The pair of main frames are disposed on the right side and left side of the vehicle center, respectively. The pair of main frames face each other in the vehicle width direction. The same applies for the pair of sheet frames.

The front wheel 4 and rear wheel 5 both include a metal wheel and a rubber tire. Hereunder, the wheel of the rear wheel 5 will be referred to as the wheel 7 and the tire of the rear wheel 5 will be referred to as the rear tire 6. The wheel 7 includes a cylindrical hub 7a extending in the vehicle width direction, an annular rim 7c surrounding the hub 7a and a plurality of spokes 7b extending from the hub 7a to the rim 7c. The rear tire 6 is mounted on the rim 7c. The hub 7a surrounds the rear axle shaft 8 extending in the vehicle width direction, and is supported by the rear axle shaft 8 via a bearing. The wheel 7 and rear tire 6 are rotatable with respect to the rear axle shaft 8.

The motorcycle 1 includes a steering handle 10 that is steered by a rider, and a front fork 12 that rotatably supports the front wheel 4. The steering handle 10 is connected to a front fork 12, as an example of a front wheel support member. The steering handle 10 and front fork 12 are rotatable with respect to the frame 2 around a steering axis corresponding to the center line of the head pipe 3. When the steering handle 10 is steered, the front wheel 4 rotates left and right together with the steering handle 10. The motorcycle 1 is thus steered.

The steering handle 10 includes a pair of left and right handle grips 11 that are gripped by the rider, and a handlebar that supports the pair of handle grips 11. The pair of handle grips 11 include a right grip mounted on the right end portion of the handlebar and a left grip mounted on the left end portion of the handlebar. The right grip is a throttle grip that is rotatable with respect to the handlebar. The output of the engine 19 is adjusted in response to the degree of rotation of the throttle grip.

The motorcycle 1 includes a swingarm 14 that swings up and down with respect to the frame 2 together with the rear wheel 5, and a rear suspension 13 that absorbs shock between the rear wheel 5 and the frame 2. The front end portion of the swingarm 14 is connected to the frame 2 via a pivot shaft that extends in the vehicle width direction. The swingarm 14 and the rear wheel 5 can be swung up and down around the pivot shaft. The upper end portion of the rear suspension 13 is mounted on the frame 2. The lower end portion of the rear suspension 13 is mounted on the swingarm 14. The rear suspension 13 is disposed at the vehicle center.

The swingarm 14 includes a right-and-left pair of main arms 15 disposed on the right and left sides of the rear wheel 5, respectively. The right end portion and left end portion of the rear axle shaft 8 are supported by the pair of main arms 15, respectively. The rear axle shaft 8 penetrates the main arm 15 in the vehicle width direction, and protrudes outward (in a direction to get away from the vehicle center in the vehicle width direction) from the main arm 15 in the vehicle width direction. The rear axle shaft 8 is fixed to the swingarm 14 by a pair of rear axle nuts 9 mounted on the right end portion and left end portion of the rear axle shaft 8. The pair of main arms 15 are disposed between the pair of rear axle nuts 9.

The motorcycle 1 includes a saddle-shaped sheet 16 on which the rider sits, and a pair of left and right main steps 17a on which the feet of the rider are placed. Fig. 1 shows an example in which the main sheet 16a on which the rider sits and a tandem sheet 16b on which a passenger sits are provided on the sheet 16. In this case, the motorcycle 1 includes a pair of left and right tandem steps 17b on which the feet of the passenger are placed. The sheet 16 may be a single-rider type instead. The sheet 16 is disposed further to the rear than the head pipe 3 of the frame 2. The sheet 16 is supported on the frame 2. The main step 17a and the tandem step 17b are also supported on the frame 2.

The motorcycle 1 includes an engine 19 (internal combustion engine) that generates power to drive the motorcycle 1, a fuel tank 20 that stores fuel to be supplied to the engine 19, and a muffler 21 that discharges exhaust produced by the engine 19 into the air. The engine 19 is an example of a prime mover. The cylinder body and crankcase of the engine 19 are mounted on the frame 2. The fuel tank 20 and muffler 21 are also mounted on the frame 2. The muffler 21 is disposed on the right side of the vehicle center. The fuel tank 20 is disposed above the engine 19. The fuel tank 20 is disposed in front of the sheet 16.

The motorcycle 1 includes a driving mechanism that transmits the power of the engine 19 to the rear wheel 5. The driving mechanism includes a drive sprocket that is driven by the engine 19. As shown in Fig. 2, the driving mechanism further includes a driven sprocket 31 that rotates together with the rear wheel 5, and an endless drive chain 32 spanning across the drive sprocket and the driven sprocket 31. The rear wheel 5 is not shown in Fig. 2. The driven sprocket 31 and drive chain 32 are disposed on the left side of the rear wheel 5. The chain cover 33 is disposed above the drive chain 32.

The motorcycle 1 includes a chain adjuster 34 that adjusts the tension of the drive chain 32 by moving the rear axle shaft 8 in the front-rear direction with respect to the swingarm 14. The chain adjuster 34 includes a puller 35 that moves in the front-rear direction with respect to the swingarm 14 together with the rear axle shaft 8, and an adjusting bolt 36 that restricts movement of the puller 35 with respect to the swingarm 14. The chain adjuster 34 further includes an adjusting nut 37 that fixes the adjusting bolt 36 onto the swingarm 14 and a lock nut 38 that prevents loosening of the adjusting nut 37.

The main arm 15 is a hollow rectangular column. An opening provided at the rear end of the main arm 15 is closed by an end plate 39 of the swingarm 14. The rear axle shaft 8 is inserted into a long hole 15a provided at the rear end portion of the main arm 15. The long hole 15a extends in the longitudinal direction of the main arm 15, which substantially coincides in the front-rear direction. The rear axle shaft 8 is movable in the front-rear direction with respect to the swingarm 14 inside the long hole 15a.

The puller 35 is disposed inside the main arm 15. A portion of the puller 35 is exposed through the long hole 15a of the swingarm 14 in a side view. The adjusting bolt 36 is mounted on the puller 35. The adjusting bolt 36 extends rearward from the puller 35 and protrudes rearward from the end plate 39. The adjusting nut 37 and the lock nut 38 are disposed behind the end plate 39. The adjusting nut 37 and lock nut 38 are mounted on the shaft portion of the adjusting bolt 36.

When the tension of the drive chain 32 is to be adjusted, both rear axle nuts 9 are loosened. In addition, the adjusting nut 37 and lock nut 38 are loosened. The rear wheel 5 is then moved in the front-rear direction to dispose the rear wheel 5 at a position for suitable tension of the drive chain 32. The rear axle shaft 8 moves in the front-rear direction together with the rear wheel 5 during this time. After the tension of the drive chain 32 has been adjusted, the adjusting nut 37 and lock nut 38 are tightened, and both rear axle nuts 9 are tightened.

As shown in Fig. 1, the motorcycle 1 includes a head lamp 22 that emits light forward, and two front flashers 23 that flash in response to operation by the rider. The motorcycle 1 also includes a tail lamp 24 that emits light rearward, and two rear flashers 25 that flash in response to operation by the rider. The head lamp 22 and front flashers 23 are disposed further to the front than the sheet 16. The tail lamp 24 and rear flashers 25 are disposed further to the rear than the front end of the rear wheel 5.

The motorcycle 1 includes a front fender 26 disposed above the front wheel 4, and an inner fender 27 and a rear fender 28 disposed above the rear wheel 5. The inner fender 27 is disposed further to the front than the rear fender 28. The inner fender 27 and rear fender 28 are mounted on the swingarm 14. The inner fender 27 and rear fender 28 swing up and down together with the swingarm 14. The front fender 26 is mounted on the front fork 12.

The rear fender 28 includes a fender portion 29 disposed above the rear wheel 5, and a pair of left and right arm portions 30 disposed on the right and left sides of the rear wheel 5, respectively. The fender portion 29 is disposed further to the rear than the rotational center of the rear wheel 5 (the center line of the rear axle shaft 8). The arm portions 30 extend obliquely forward and downward from the fender portion 29 toward the rotational center of the rear wheel 5. As shown in Fig. 2, the right arm portion 30 is fastened to the swingarm 14 by a plurality of bolts B1. Likewise, the left arm portion 30 is fastened to the swingarm 14 by a plurality of bolts.

The swingarm 14 includes, in addition to the pair of main arms 15, a pair of brackets disposed on the right and left sides of the rear wheel 5, respectively. The pair of brackets include a right bracket 41 that protrudes upward from the rear end portion of the right main arm 15, and a left bracket that protrudes upward from the rear end portion of the left main arm 15. Fig. 2 shows an example in which the right bracket 41 is a separate member from the right main arm 15 and fixed to the right main arm 15. The right bracket 41 may also be integral with the right main arm 15. The same applies to the relationship between the left bracket and the left main arm 15.

The right bracket 41 and left bracket are disposed on the right and left sides of the rear wheel 5, respectively. The right bracket 41 and left bracket are disposed above the rear axle shaft 8 and rear axle nut 9 in a side view. The right bracket 41 and left bracket are surrounded by a plurality of teeth provided on the outer perimeter of the driven sprocket 31 in side view. The right bracket 41 and left bracket are disposed lower than the top end of the driven sprocket 31. The right bracket 41 and left bracket are shorter than the main arm 15 in the front-rear direction.

As shown in Fig. 3, the right bracket 41 includes two base portions 42 in which two female screws 42a are provided. Likewise, the left bracket also includes two base portions in which two female screws are provided. The two bolts B1 fixing the right arm portion 30 of the rear fender 28 to the swingarm 14 are mounted in the female screws 42a of the two base portions 42 of the right bracket 41. Likewise, the two bolts fixing the left arm portion 30 of the rear fender 28 to the swingarm 14 are mounted in the female screws of the two base portions of the left bracket.

The right bracket 41 includes, in addition to the two base portions 42, a penetrating portion 43 disposed between the two base portions 42 in the front-rear direction. The penetrating portion 43 penetrates the right bracket 41 in the vehicle width direction. The penetrating portion 43 is a notched portion opening upward in a side view. The penetrating portion 43 may also be a through-hole that is closed across its entire circumference. The bottom (lower end portion) of the penetrating portion 43 is disposed lower than the female screws 42a of the base portions 42. The area (space area) of the penetrating portion 43 in a side view is larger than the area of the female screws 42a of the base portions 42 in a side view.

As shown in Fig. 2, the lower end portion 30a of the right arm portion 30 is disposed on the outer side of the right bracket 41 in the vehicle width direction. The head portion of the bolt B1 is disposed on the outer side of the arm portion 30 in the vehicle width direction. The shaft portion of the bolt B1 is inserted in a through-hole penetrating the arm portion 30 in the vehicle width direction, and it protrudes inward (in a direction to approach the vehicle center in the vehicle width direction) from the arm portion 30 in the vehicle width direction. The male screws of the two bolts B1 are mounted in the two female screws 42a of the right bracket 41, respectively. The right arm portion 30 is thus fastened.

Next, the ABS (anti-lock braking system) will now be described.

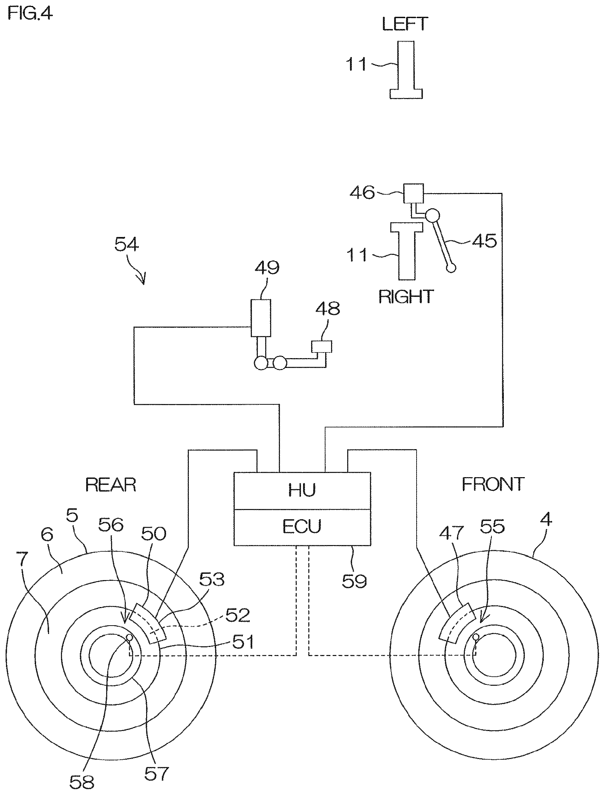

Fig. 4 is a conceptual drawing for illustration of the ABS 54. The motorcycle 1 includes a hydraulic front brake 47 that applies damping force to the front wheel 4, a hydraulic rear brake 50 that applies damping force to the rear wheel 5, and an ABS 54 that controls locking of the front wheel 4 and rear wheel 5 by controlling the hydraulic pressure applied to the front brake 47 and rear brake 50.

The motorcycle 1 includes a brake lever 45 that is operated by the rider when damping force is to be generated in the front brake 47, and a front master cylinder 46 that actuates the front brake 47 in response to operation of the brake lever 45. The motorcycle 1 further includes a brake pedal 48 that is operated by the rider when damping force is to be generated in the rear brake 50, and a rear master cylinder 49 that actuates the rear brake 50 in response to operation of the brake pedal 48. The motorcycle 1 may also include, instead of the brake pedal 48, a rear brake lever that is operated by the hand of the rider.

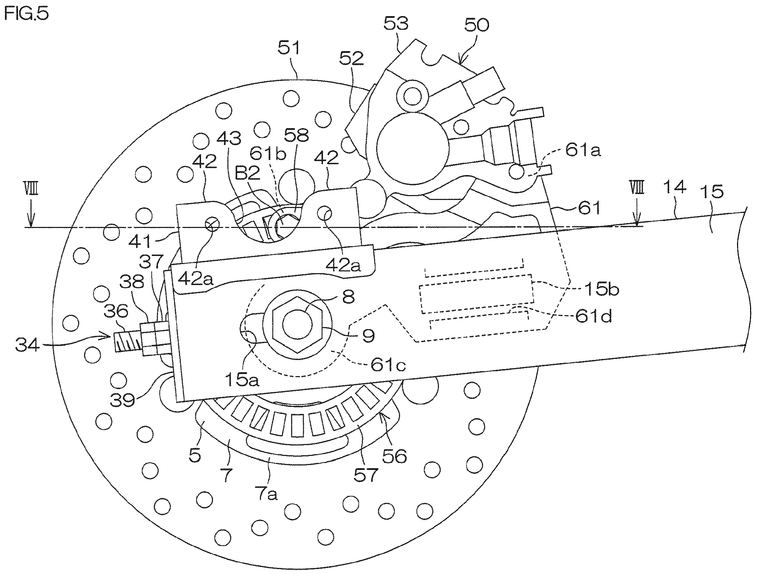

The front brake 47 and rear brake 50 are both disk brakes. The rear brake 50 includes a brake disc 51 that rotates together with the rear wheel 5, a brake pad 52 pressed against the brake disc 51, and a brake caliper 53 that holds the brake pad 52. The brake disc 51 is mounted on the wheel 7 of the rear wheel 5 and rotates together with the rear wheel 5. The brake caliper 53 is supported by the rear axle shaft 8 via a holder 61 described below (see Fig. 5). The brake caliper 53 does not rotate even when the rear wheel 5 has rotated.

The brake lever 45 is disposed in front of the right handle grip 11. The brake pedal 48 is disposed in front of the right main step 17a. The brake lever 45 is connected to the front master cylinder 46, while the brake pedal 48 is connected to the rear master cylinder 49. When the rider grips the brake lever 45, hydraulic pressure is transmitted from the front master cylinder 46 to the front brake 47, and the front brake 47 generates damping force. Similarly, when the rider steps on the brake pedal 48, hydraulic pressure is transmitted from the rear master cylinder 49 to the rear brake 50, and the rear brake 50 generates damping force.

The ABS 54 includes a front pulse generator 55 that detects the rotational speed of the front wheel 4, and a rear pulse generator 56 that detects the rotational speed of the rear wheel 5. The front pulse generator 55 includes a disk-shaped rotor that rotates together with the front wheel 4, and a wheel speed sensor that generates a pulse signal in response to the rotational speed of the rotor 57. Likewise, the rear pulse generator 56 includes a disk-shaped rotor 57 that rotates together with the rear wheel 5, and a wheel speed sensor 58 that generates a pulse signal in response to the rotational speed of the rotor 57.

The rotor 57 of the rear pulse generator 56 is mounted on the wheel 7 of the rear wheel 5. The rotor 57 rotates together with the wheel 7. The wheel speed sensor 58 of the rear pulse generator 56 is supported by the rear axle shaft 8 via the holder 61 described below. The wheel speed sensor 58 does not rotate even when the rear wheel 5 has rotated. The rotor 57 and the wheel speed sensor 58 face each other across a gap in the vehicle width direction.

The ABS 54 includes a hydraulic unit HU that varies the hydraulic pressure applied to the front brake 47 and rear brake 50. The hydraulic unit HU includes a housing that defines an oil passage interposed between the front master cylinder 46 and rear master cylinder 49 and the front brake 47 and rear brake 50. The hydraulic unit HU further includes a solenoid valve housed in the housing, a pump that delivers brake oil to the oil passage of the housing, and an electric motor that drives the pump.

The ABS 54 includes an ECU (Electronic Control Unit) 59 that controls the hydraulic unit HU based on the rotational speeds of the front wheel 4 and rear wheel 5. The detected values of the front pulse generator 55 and rear pulse generator 56 are communicated to the ECU 59. The ECU 59 controls the solenoid valve and electric motor of the hydraulic unit HU based on the detected values of the front pulse generator 55 and rear pulse generator 56. As a result, the damping force on the front wheel 4 and rear wheel 5 is adjusted and locking of the front wheel 4 and rear wheel 5 is controlled.

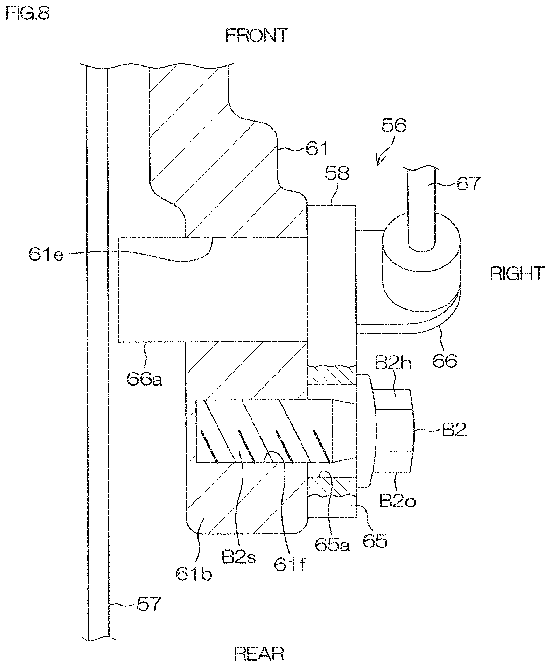

Fig. 5, Fig. 6 and Fig. 7 are a right side view, plan view and rear side view, respectively, of the swingarm 14, rear brake 50 and rear pulse generator 56. Fig. 8 is a cross-sectional view showing a cross-section along line VIII-VIII in Fig. 5. Fig. 5 to Fig. 7 show a state in which the rear axle shaft 8 is disposed at an overlapping position described below.

As shown in Fig. 5, the brake disc 51 and brake caliper 53 of the rear brake 50 are disposed on the right side of the rear wheel 5. Likewise, the rotor 57 and wheel speed sensor 58 of the rear pulse generator 56 are disposed on the right side of the rear wheel 5. The holder 61 holding the brake caliper and wheel speed sensor 58 is also disposed on the right side of the rear wheel 5.

The brake disc 51 and rotor 57 are fixed to the wheel 7 of the rear wheel 5. The brake disc 51 and rotor 57 surround the rear axle shaft 8. The brake disc 51 and rotor 57 are also coaxial with the rear axle shaft 8. The outer diameter of the rotor 57 is smaller than the outer diameter of the brake disc 51. The right main arm 15 is disposed on the right side of the brake disc 51, rotor 57 and holder 61, such that they overlap in a side view.

The brake caliper and wheel speed sensor 58 are supported by the rear axle shaft 8 via the holder 61. The holder 61 includes a caliper holding portion 61a that holds the brake caliper, and a sensor holding portion 61b that holds the wheel speed sensor 58. The brake caliper is fixed to the caliper holding portion 61a by a bolt. The wheel speed sensor 58 is fixed to the sensor holding portion 61b by a sensor bolt B2.

The holder 61 includes a cylindrical portion 61c through which the rear axle shaft 8 is inserted, and a groove portion 61d that extends in the front-rear direction while recessing inward in the vehicle width direction. The groove portion 61d is disposed on the inner side of the main arm 15 in the vehicle width direction. The main arm 15 includes a guide protrusion 15b inserted in the groove portion 61d while extending in the front-rear direction. The groove portion 61d is movable in the front-rear direction along the guide protrusion 15b. Movement of the groove portion 61d in the up-down direction is restricted by the guide protrusion 15b. When the rear axle shaft 8 is moved in the front-rear direction with respect to the swingarm 14, the cylindrical portion 61c is pressed in the front-rear direction by the rear axle shaft 8, and the groove portion 61d moves in the front-rear direction along the guide protrusion 15b.

As shown in Fig. 8, the wheel speed sensor 58 includes a flange portion 65 having a through-hole 65a formed in which a shaft portion B2s of the sensor bolt B2 is inserted, and a cylindrical sensor portion 66 inserted into an insertion hole 61e penetrating the holder 61 in the vehicle width direction. One end of wiring 67 that transmits the detected value of the wheel speed sensor 58 to an ECU 59 (see Fig. 4) is connected to the sensor portion 66, and is disposed on the outer side of the holder 61, in the vehicle width direction.

The head portion B2h of the sensor bolt B2 is disposed on the outer side of the flange portion 65 of the wheel speed sensor 58 in the vehicle width direction. The shaft portion B2s of the sensor bolt B2 is inserted into the through-hole 65a of the wheel speed sensor 58 from the outer side of the wheel speed sensor 58. The male screw of the sensor bolt B2 is mounted in a female screw 61f formed in the holder 61. The sensor bolt B2 is parallel to the sensor portion 66 of the wheel speed sensor 58.

The sensor bolt B2 is an example of a fastening member that fastens the wheel speed sensor 58 to the holder 61. FIG. 8 shows an example in which the sensor bolt B2 is a hexagon head bolt. In this example, the head portion B2h of the sensor bolt B2 includes an outer circumference surface B2o having a hexagonal cross-section. The outer circumference surface B2o of the head portion B2h is an example of a tool-fitted portion that comes into contact with a tool that rotates together with the sensor bolt B2. The tip of the tool such as socket wrench is disposed around the head portion B2h of the sensor bolt B2 and rotates together with the head portion B2h.

The sensor portion 66 of the wheel speed sensor 58 is disposed further forward than the sensor bolt B2. The sensor portion 66 includes a sensor head 66a protruding inward from the holder 61, in the vehicle width direction. The sensor head 66a is disposed on the outer side of the rotor 57 in the vehicle width direction. The sensor head 66a and rotor 57 face each other across a gap in the vehicle width direction. When a plurality of slits (see Fig. 5) formed in the rotor 57 successively pass through the sensor head 66a, a pulse signal is output from the wheel speed sensor 58 in response to the rotational speed of the rotor 57.

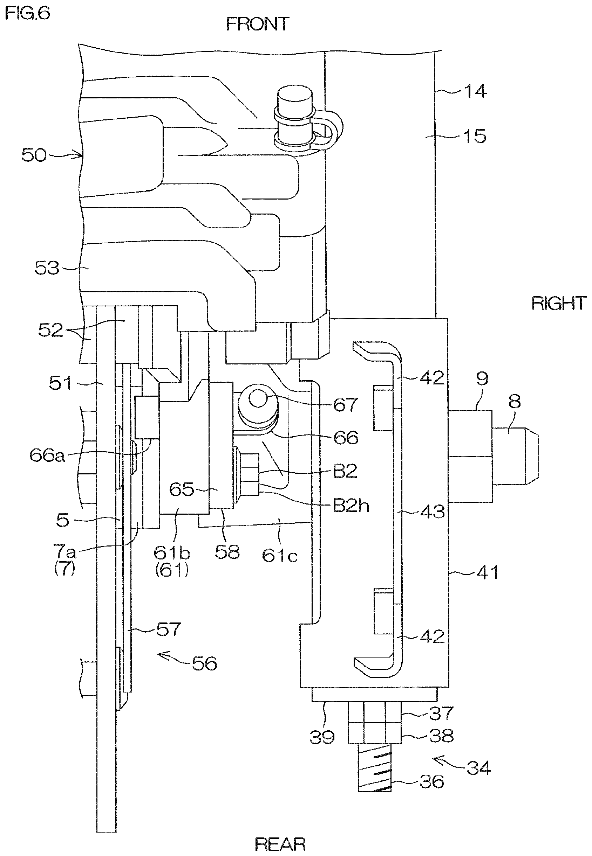

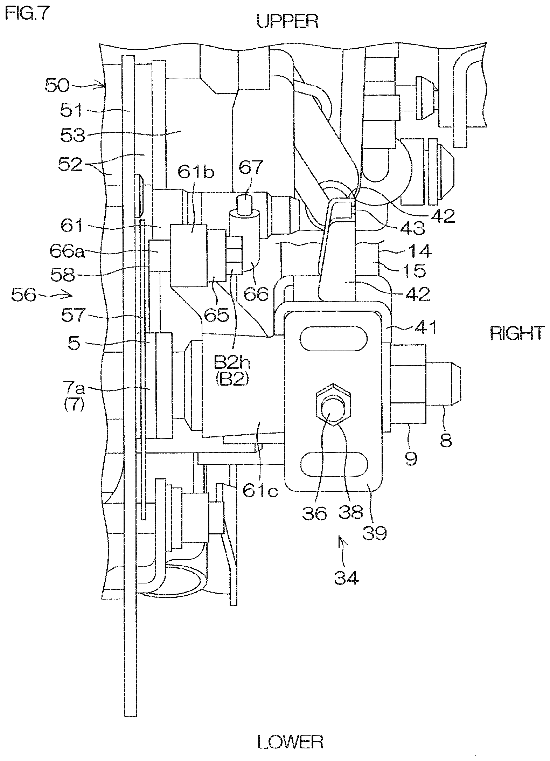

As shown in Fig. 5, the wheel speed sensor 58 is disposed above the rear axle shaft 8 and the rear axle nut 9, in a side view. The wheel speed sensor 58 is disposed above the main arm 15, in a side view. As shown in Fig. 6, the sensor head 66a is disposed above the hub 7a of the wheel 7 of the rear wheel 5, and it overlaps with the hub 7a when the wheel speed sensor 58 is viewed from above. As shown in Fig. 7, the sensor head 66a is disposed at the rear of the holder 61 and overlaps with the holder 61 when the wheel speed sensor 58 is viewed from behind.

When the tension of the drive chain 32 is adjusted by the chain adjuster 34, the rear wheel 5 and rear axle shaft 8 are moved in the front-rear direction with respect to the swingarm 14. During this time, the rotor 57 and the wheel speed sensor 58 move in the front-rear direction with respect to the swingarm 14 together with the rear axle shaft 8. Consequently, the positional relationship between the rotor 57 and the wheel speed sensor 58 does not change even when the rear wheel 5 has been moved in the front-rear direction with respect to the swingarm 14.

Next, attachment and removal of the wheel speed sensor 58 onto the holder 61 will now be explained.

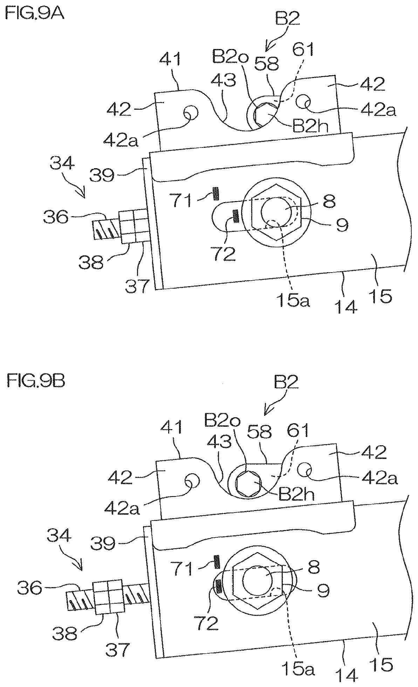

Fig. 9A and Fig. 9B are right side views showing the positional relationship between the right bracket 41 and the sensor bolt B2. Fig. 9A shows the state where the rear axle shaft 8 is disposed at the overlapping position, and Fig. 9B shows the state where the rear axle shaft 8 is disposed at the non-overlapping position.

When the rear wheel 5 and rear axle shaft 8 are moved in the front-rear direction with respect to the swingarm 14, the holder 61 moves in the front-rear direction with respect to the swingarm 14 together with the rear axle shaft 8. Consequently, the wheel speed sensor 58 and sensor bolt B2 that are held by the holder 61 also move in the front-rear direction with respect to the swingarm 14. The rear axle shaft 8 moves in the front-rear direction with respect to the swingarm 14, between a plurality of locations including the overlapping position (the position shown in Fig. 9A) and the non-overlapping position (the position shown in Fig. 9B).

As shown in Fig. 9A, when the rear axle shaft 8 is disposed at the overlapping position, the base portion 42 in front of the right bracket 41 overlaps with a portion of the head portion B2h of the sensor bolt B2, in a side view. In contrast, when the rear axle shaft 8 is disposed at the non-overlapping position as shown in Fig. 9B, the penetrating portion 43 of the right bracket 41 overlaps with any portion of the outer circumference surface B2o of the head portion B2h of the sensor bolt B2, in a side view. In other words, in this configuration, the entire outer circumference surface B2o of head portion B2h of the sensor bolt B2 is exposed through the right bracket 41, in a side view.

When the wheel speed sensor 58 is attached to the holder 61 or the removed from the holder 61, the rear axle shaft 8 is moved to the non-overlapping position, exposing the head portion B2h of the sensor bolt B2 through the right bracket 41, in a side view. A tool such as a socket wrench is subsequently fitted on the head portion B2h of the sensor bolt B2 from the outer side of the sensor bolt B2, in the vehicle width direction. During this time, a portion of the tool is disposed inside the penetrating portion 43 of the right bracket 41. After the tool has been fitted on the head portion B2h of the sensor bolt B2, the tool is rotated to tighten or loosen the sensor bolt B2. This allows the wheel speed sensor 58 to be attached to the holder 61 and removed from the holder 61.

As shown in Fig. 9A and Fig. 9B, a fixed mark 71 is provided on the right side surface of the main arm 15. Likewise, a moving mark 72 is provided on the puller 35. The moving mark 72 of the puller 35 is exposed by the long hole 15a of the swingarm 14 in a side view. The fixed mark 71 and moving mark 72 may be a convex portion or a concave portion, they may be written by laser marking or with ink, or they may be seals attached to the main arm 15 or puller 35. The fixed mark 71 and moving mark 72 may be linear or punctiform, or in any other form.

The fixed mark 71 serves as a reference for the position of the puller 35 with respect to the swingarm 14. The fixed mark 71 is provided at a prescribed location of the swingarm 14 such that the rear axle shaft 8 is disposed at the non-overlapping position when the fixed mark 71 and the moving mark 72 are at their closest points. Thus, when the rear wheel 5 and rear axle shaft 8 are moved in the front-rear direction with respect to the swingarm 14 to bring the moving mark 72 of the puller 35 close to the fixed mark 71 of the main arm 15, the rear axle shaft 8 is disposed at the non-overlapping position. This allows the head portion B2h of the sensor bolt B2 to be exposed through the right bracket 41, in a side view.

As described above, in the first preferred embodiment, the wheel speed sensor 58 of the ABS 54 that detects the rotational speed of the rear wheel 5 is fastened to the holder 61 by the sensor bolt B2. The holder 61 moves in the front-rear direction with respect to the swingarm 14 together with the rear axle shaft 8. When the rear axle shaft 8 is moved in the front-rear direction with respect to the swingarm 14 by the chain adjuster 34 in order to adjust the tension of the drive chain 32, the wheel speed sensor 58 and sensor bolt B2 that are supported by the holder 61 also move in the front-rear direction with respect to the swingarm 14.

When the rear axle shaft 8 is at the overlapping position, the right bracket 41 of the swingarm 14 overlaps with at least a portion of the head portion B2h of the sensor bolt B2 in a side view. If the sensor bolt B2 is hidden by the right bracket 41, at least a portion of the wheel speed sensor 58 is also hidden by the right bracket 41. Gravel flying inward in the vehicle width direction toward the wheel speed sensor 58 could be thus blocked by the right bracket 41. Therefore, the wheel speed sensor 58 is expected to be guarded from gravel.

On the other hand, when the rear axle shaft 8 is at the non-overlapping position, the right bracket 41 of the swingarm 14 does not overlap with any portion of the head portion B2h of the sensor bolt B2 in a side view. In other words, the entire head portion B2h of the sensor bolt B2 is exposed through the right bracket 41 in a side view. It is thus possible to fit a tool to rotate the sensor bolt B2 onto the head portion B2h of the sensor bolt B2, from the outer side in the vehicle width direction. This prevents workability to attach or detach the wheel speed sensor 58 of the ABS 54 from worsening.

According to this preferred embodiment, when the puller 35 of the chain adjuster 34 is moved in the front-rear direction with respect to the swingarm 14 together with the rear axle shaft 8 to align the moving mark 72 indicating the reference position of the puller 35 with the fixed mark 71 of the swingarm 14, the rear axle shaft 8 is disposed at the non-overlapping position, and the entire head portion B2h of the sensor bolt B2 is exposed through the right bracket 41 of the swingarm 14, in a side view. Thus, the head portion B2h of the sensor bolt B2 can be easily exposed through the right bracket 41, in a side view.

According to this preferred embodiment, the right bracket 41 of the swingarm 14 is disposed on the outer side of the wheel speed sensor 58 in the vehicle width direction, and the lower end portion of the rear fender 28 (the lower end portion 30a of the arm portion 30), as an example of the supported body, is disposed on the outer side of the right bracket 41 in the vehicle width direction. Thus, gravel flying inward in the vehicle width direction toward the wheel speed sensor 58 could be blocked by the right bracket 41 and the supported body. Therefore, the wheel speed sensor 58 is expected to be guarded from gravel.

According to this preferred embodiment, the rear fender 28 is mounted on two base portions 42 provided on the right bracket 41 of the swingarm 14. When the rear axle shaft 8 is at the overlapping position, the base portion 42 of the right bracket 41 overlaps with at least a portion of the head portion B2h of the sensor bolt B2, in a side view. When the rear axle shaft 8 is at the non-overlapping position, on the other hand, the entire head portion B2h of the sensor bolt B2 is disposed in the penetrating portion 43 of the right bracket 41, i.e. in the space penetrating the right bracket 41 in the vehicle width direction, in a side view. This allows the sensor bolt B2 to be exposed through the right bracket 41, in a side view.

According to this preferred embodiment, the right bracket 41 of the swingarm 14 defines a notch penetrating the right bracket 41 in the vehicle width direction and opening upward in a side view. When the penetrating portion 43 of the right bracket 41 is a through-hole that is closed over its entire circumference, a portion of the right bracket 41 is disposed above the through-hole. When a tool is fitted onto the bolt and removed from the bolt, such a portion can interfere with the tool. Therefore, workability to attach or detach the wheel speed sensor 58 can be improved.

According to this preferred embodiment, the sensor head 66a of the wheel speed sensor 58 and the side surface of the rotor 57 face each other. The sensor head 66a is disposed behind the holder 61 and overlaps with the holder 61 when the wheel speed sensor 58 is viewed from behind. Gravel flying rearward toward the sensor head 66a could be blocked by the holder 61. Therefore, the wheel speed sensor 58 is expected to be guarded from gravel.

According to this preferred embodiment, the sensor head 66a of the wheel speed sensor 58 is disposed above the hub 7a which corresponds to the central portion of the wheel 7 of the rear wheel 5, and it overlaps with the hub 7a when the wheel speed sensor 58 is viewed from above. Gravel flying upward toward the sensor head 66a could be blocked by the hub 7a of the wheel 7. Therefore, the wheel speed sensor 58 is expected to be guarded from gravel.

According to this preferred embodiment, the holder 61 holds the brake caliper in addition to the wheel speed sensor 58. Therefore, it is not necessary to provide separate holders to hold the wheel speed sensor 58 and brake caliper 53. This will allow the motorcycle 1 to be more lightweight, and can improve workability to produce the motorcycle 1.

According to this preferred embodiment, flying matters flying from the drive chain 32 toward the wheel speed sensor 58 when the motorcycle 1 is traveling could be blocked by the rear wheel 5, and therefore the wheel speed sensor 58 is expected to be guarded from the gravel. In addition, since the sensor bolt B2 and drive chain 32 are disposed on mutually opposite sides of the rear wheel 5, the drive chain 32 does not interfere with tools when the tools are fitted onto the sensor bolt B2.

A second preferred embodiment will now be described.

The second preferred embodiment is mainly different from the first preferred embodiment in that the main arm 15 is solid, and the right bracket 41 is integrated with the main arm 15.

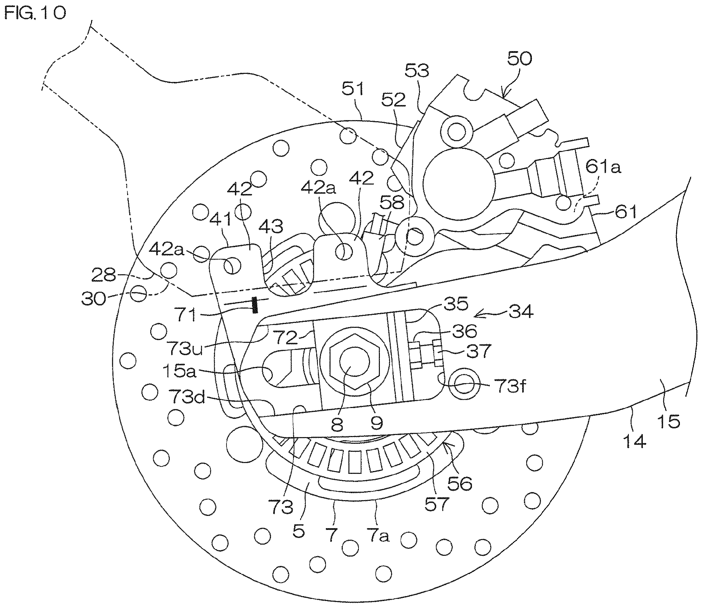

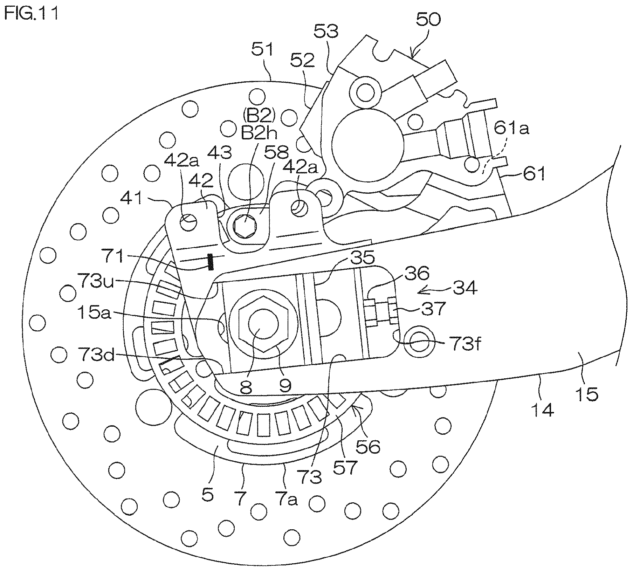

Fig. 10 and Fig. 11 are right side views showing a swingarm 14, a rear brake 50 and a rear pulse generator 56 according to the second preferred embodiment. Fig. 10 shows a state in which the rear axle shaft 8 is disposed at the overlapping position. Fig. 11 shows a state in which the rear axle shaft 8 is disposed at the non-overlapping position. In Fig. 10 and Fig. 11, the aspects of the construction equivalent to the construction illustrated in Fig. 1 to Fig. 9 are assigned the same reference numerals as Fig. 1 and explanation thereof will be omitted.

The puller 35 of the chain adjuster 34 is disposed on the outer side of the main arm 15 in the vehicle width direction. The puller 35 is rectangular in a side view. The puller 35 is disposed in a guide groove 73 that is recessed inward in the vehicle width direction from the right side surface of the right main arm 15. The guide groove 73 extends in the longitudinal direction of the main arm 15, which substantially coincides in the front-rear direction. Rotation of the puller 35 around the rear axle shaft 8 with respect to the swingarm 14 is restricted by an upper wall portion 73u and lower wall portion 73d of the guide groove 73.

The adjusting bolt 36 and adjusting nut 37 of the chain adjuster 34 are disposed in front of the puller 35. The adjusting bolt 36 extends rearward from the front wall portion 73f of the guide groove 73. The male screw of the adjusting bolt 36 is fitted in the female screw of the main arm 15. The adjusting bolt 36 is fixed to the swingarm 14 by the adjusting nut 37. Movement of the puller 35 forward with respect to the swingarm 14 is restricted by the head portion of the adjusting bolt 36.

The fixed mark 71 serving as reference for the position of the puller 35 with respect to the swingarm 14 is provided in the right bracket 41. The fixed mark 71 may also be provided in the main arm 15. When the rear wheel 5 and rear axle shaft 8 are moved in the front-rear direction with respect to the swingarm 14, so that the back edge of the puller 35 approaches the fixed mark 71 of the swingarm 14, the rear axle shaft 8 is disposed at the non-overlapping position. That is, the back edge of the puller 35 functions as the moving mark 72.

Similar to the first preferred embodiment, as shown in Fig. 10, when the rear axle shaft 8 is disposed at the overlapping position, the base portion 42 in front of the right bracket 41 overlaps with the entire head portion B2h of the sensor bolt B2, in a side view. In contrast, when the rear axle shaft 8 is disposed at the non-overlapping position as shown in Fig. 11, the penetrating portion 43 of the right bracket 41 overlaps with any portion of the head portion B2h of the sensor bolt B2, in a side view. The second preferred embodiment can therefore exhibit the same function and effect as the first preferred embodiment.

### Other Preferred Embodiments

Although preferred embodiments have been described above, various modifications of the embodiments are possible.

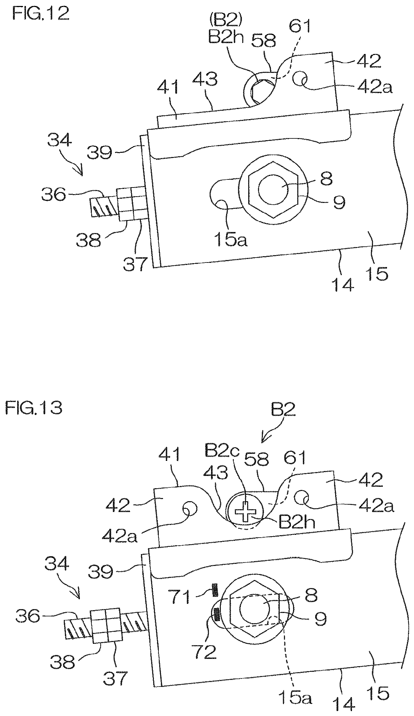

For example, as shown in Fig. 12, the number of base portions 42 provided on the right bracket 41 may be only one. In this case, the base portion 42 may be provided either in front of, or behind the penetrating portion 43.

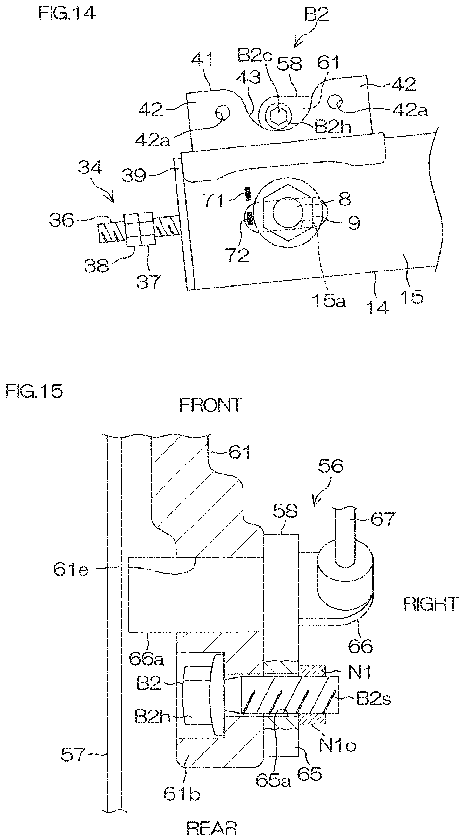

As shown in FIGS.13 and 14, the head portion B2h of the sensor bolt B2 may include, instead of the outer circumference surface B2o having the hexagonal cross-section, a concave portion B2c into which a tip of a tool such as screwdriver or hexagon wrench is inserted.

The concave portion B2c of the sensor bolt B2 is an example of the tool-fitted portion that comes into contact with a tool. The concave portion B2c is concaved inward with respect to the vehicle width direction from the end surface of the head portion B2h. FIG. 13 shows an example in which the concave portion B2c is a cruciform hole in a side view. FIG. 14 shows an example in which the concave portion B2c is a hexagon hole in a side view. The concave portion B2c may have a shape other than cruciform and hexagon shapes.

FIGS.13 and 14 each show states in which the rear axle shaft 8 is disposed at the non-overlapping position. In the states, the entire of the concave portion B2c of the sensor bolt B2 is exposed from the right bracket 41 in a side view. In the states, the head portion B2h may overlap the right bracket 41, or may not overlap the right bracket 41. FIG. 13 shows an example of the former, and FIG. 14 shows an example of the later.

As shown in FIG.15, a sensor nut N1 may be provided in addition to the sensor bolt B2. The sensor nut N1 is disposed outward of the flange portion 65 of the wheel speed sensor 58 with respect to the vehicle width direction. The shaft portion B2s of the sensor bolt B2 protrudes outward from the sensor holding portion 61b with respect to the vehicle width direction and is inserted into the through-hole 65a of the wheel speed sensor 58. The sensor nut N1 is attached to the tip of the shaft portion B2s.

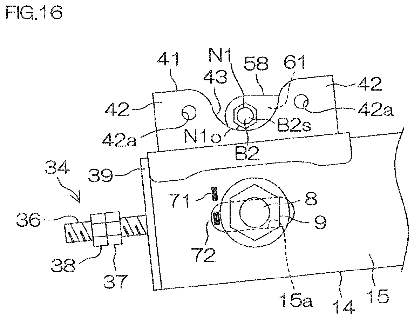

FIG.16 shows a state in which the rear axle shaft 8 is disposed at the non-overlapping position. In this state, the entire of the sensor nut N1 is exposed from the right bracket 41 in a side view. An outer circumference surface N1o of the sensor nut N1 is an example of the tool-fitted portion that comes into contact with a tool. The tip of the tool such as socket wrench is disposed around the sensor nut N1 and rotates together with the sensor nut N1. Thus, the sensor nut N1 is fixed and the wheel speed sensor 58 is fastened to the holder 61.

The fixed mark 71 serving as reference for the position of the puller 35 with respect to the swingarm 14 may also be omitted from the swingarm 14. The moving mark 72 of the puller 35 may likewise be omitted.

The lower end portion 30a of the arm portion 30 of the rear fender 28 does not need to be overlapping the wheel speed sensor 58 in a side view.

The sensor head 66a does not need to overlap with the holder 61, when the wheel speed sensor 58 is viewed from behind. Similarly, the sensor head 66a does not need to overlap with the hub 7a of the wheel 7 of the rear wheel 5, when the wheel speed sensor 58 is viewed from above.

The wheel speed sensor 58 and brake caliper may be held by separate holders instead of by the same holder 61.

The wheel speed sensor 58 and sensor bolt B2 may also be disposed on the same side of the rear wheel 5 as the drive chain 32.

The motorcycle 1 may also include two rear suspensions disposed on the right and left sides of the rear wheel 5, respectively. In this case, instead of the rear fender 28 as an example of a supported body, the lower end portion of the rear suspension as another example of a supported body, may be mounted on the right bracket 41 of the swingarm 14.

The straddled vehicle is not limited to the motorcycle 1, but may be a vehicle including not less than 3 wheels or an all-terrain vehicle.

Two or more arrangements among all the arrangements described above may be combined.

## Claims

1. A straddled vehicle (1) comprising:
a rear wheel (5),
a prime mover (19) that is configured to rotate the rear wheel (5),
a rear axle shaft (8) that rotatably supports the rear wheel (5),
a swingarm (14) that includes a main arm (15) supporting the rear axle shaft (8) and a bracket (41) protruding upward from the main arm (15),
a supported body (28) mounted on the bracket (41),
a drive chain (32) that is configured to transmit rotation of the prime mover (19) to the rear wheel (5),
a chain adjuster (34) that is configured to adjust tension of the drive chain (32) by moving the rear axle shaft (8) in a front-rear direction of the straddled vehicle (1) with respect to the swingarm (14) among a plurality of positions including an overlapping position and a non-overlapping position,
a rear brake (50) that is configured to apply damping force to the rear wheel (5),
an ABS (54) which includes a rotor (57) that is configured to rotate together with the rear wheel (5) and a wheel speed sensor (58) that is configured to detect a rotational speed of the rear wheel (5) by detecting the rotational speed of the rotor (57), and which is configured to change the damping force of the rear brake (50) based on the rotational speed of the rear wheel (5),
a holder (61) that is configured to hold the wheel speed sensor (58), is mounted on the rear axle shaft (8), and that is configured to move in the front-rear direction of the straddled vehicle (1) with respect to the swingarm (14) together with the rear axle shaft (8), and
a sensor fastening member (B2, N1) that includes a tool-fitted portion (B2o, B2c, N1o) disposed on the outer side of the wheel speed sensor (58) in a width direction of the straddled vehicle (1) and configured to come into contact with a tool that is configured to fasten the wheel speed sensor (58) to the holder (61),
**characterized in that** when the rear axle shaft (8) is at the overlapping position, the bracket (41) of the swingarm (14) overlaps with at least a portion of the tool-fitted portion (B2o, B2c, N1o) of the sensor fastening member (B2, N1) in a side view of the straddled vehicle (1), and when the rear axle shaft (8) is at the non-overlapping position, the bracket (41) of the swingarm (14) does not overlap with any portion of the tool-fitted portion (B2o, B2c, N1o) of the sensor fastening member (B2, N1) in a side view of the straddled vehicle (1).

2. A straddled vehicle (1) according to claim 1, wherein
the sensor fastening member (B2, N1) is a bolt (B2) including a head portion (B2h) provided with the tool-fitted portion (B2o, B2c) and a shaft portion (B2s) extending from the head portion (B2h) in the width direction of the straddled vehicle (1),
wherein when the rear axle shaft (8) is at the overlapping position, the bracket (41) of the swingarm (14) overlaps with at least a portion of the head portion (B2h) of the bolt (B2) in a side view of the straddled vehicle (1), and when the rear axle shaft (8) is at the non-overlapping position, the bracket (41) of the swingarm (14) does not overlap with any portion of the head portion (B2h) of the bolt (B2) in a side view of the straddled vehicle (1).

3. A straddled vehicle (1) according to claim 1, wherein
the sensor fastening member (N1) is a nut (N1) provided with the tool-fitted portion (N1o),
wherein when the rear axle shaft (8) is at the overlapping position, the bracket (41) of the swingarm (14) overlaps with at least a portion of the nut (N1) in a side view of the straddled vehicle (1), and when the rear axle shaft (8) is at the non-overlapping position, the bracket (41) of the swingarm (14) does not overlap with any portion of the nut (N1) in a side view of the straddled vehicle (1).

4. A straddled vehicle (1) according to any one of claims 1 to 3, wherein
the chain adjuster (34) includes a puller (35) that is visible in a side view of the straddled vehicle (1), and that is configured to move in the front-rear direction of the straddled vehicle (1) with respect to the swingarm (14) together with the rear axle shaft (8) and
the swingarm (14) includes a fixed mark (71) that serves as reference for a position of the puller (35) with respect to the swingarm (14) and that is provided at a location of the swingarm (14) where the rear axle shaft (8) is disposed at the non-overlapping position.

5. A straddled vehicle (1) according to any one of claims 1 to 4, wherein the supported body (28) is disposed on the outer side of the wheel speed sensor (58) and the bracket (41) in the width direction of the straddled vehicle (1), and includes a lower end portion (30a) that overlaps with the wheel speed sensor (58) and the bracket (41) in a side view of the straddled vehicle (1).

6. A straddled vehicle (1) according to any one of claims 1 to 5, wherein the bracket (41) includes a penetrating portion (43) that penetrates the bracket (41) in the width direction of the straddled vehicle (1), and two base portions (42) on which the supported body (28) is mounted and disposed in front of and behind the penetrating portion (43), respectively,
when the rear axle shaft (8) is at the overlapping position, one of the two base portions (42) overlaps with at least a portion of the tool-fitted portion (B2o, B2c, N1o) of the sensor fastening member (B2, N1) in a side view of the straddled vehicle (1), and
when the rear axle shaft (8) is in the non-overlapping position, the penetrating portion (43) overlaps with any portion of the tool-fitted portion (B2o, B2c, N1o) of the sensor fastening member (B2, N1) in a side view of the straddled vehicle (1).

7. A straddled vehicle (1) according to claim 6, wherein the penetrating portion (43) of the bracket (41) is a notch opening upward in a side view of the straddled vehicle (1).

8. A straddled vehicle (1) according to any one of claims 1 to 7, wherein the wheel speed sensor (58) includes a sensor head (66a) that protrudes inward from the holder (61) in the width direction of the straddled vehicle (1), and that faces the rotor (57), and
the sensor head (66a) is disposed behind the holder (61), and overlaps with the holder (61) when the wheel speed sensor (58) is viewed from behind.

9. A straddled vehicle (1) according to any one of claims 1 to 8, wherein
the rear wheel (5) includes a wheel (7) and a tire (6),
the wheel (7) includes a cylindrical hub (7a) on which the rear axle shaft (8) is mounted, an annular rim (7c) on which the tire (6) is mounted and a plurality of spokes (7b) extending from the hub (7a) to the rim (7c),
the wheel speed sensor (58) includes a sensor head (66a) that protrudes inward from the holder (61) in the width direction of the straddled vehicle (1) and that faces the rotor (57), and
the sensor head (66a) is disposed above the hub (7a) and overlaps with the hub (7a) when the wheel speed sensor (58) is viewed from above.

10. A straddled vehicle (1) according to any one of claims 1 to 9, wherein the rear brake (50) is a disk brake including a brake disc (51) that is configured to rotate together with the rear wheel (5), a brake pad (52) that is pressed against the brake disc (51), and a brake caliper (53) that is configured to hold the brake pad (52), and
the holder (61) includes a sensor holding portion that is configured to hold the wheel speed sensor (58) and a caliper holding portion (61a) that is configured to hold the brake caliper (53).

11. A straddled vehicle (1) according to claim 10, wherein the rotor (57) of the ABS (54) has an outer diameter that is smaller than the outer diameter of the brake disc (51).

12. A straddled vehicle (1) according to any one of claims 1 to 11, wherein the wheel speed sensor (58) and the sensor fastening member (B2, N1) are disposed on a side opposite to the drive chain (32) with respect to the rear wheel (5).

13. A straddled vehicle (1) according to any one of claims 1 to 12, wherein the swingarm (14) includes a pair of main arms (15) disposed on the right and left sides of the rear wheel (5), respectively.

## Patentansprüche

1. Spreizsitz-Fahrzeug (1), das umfasst:
ein Hinterrad (5),
einen Primärantrieb (19), der zum Drehen des Hinterrades (5) eingerichtet ist,
eine hintere Achswelle (8), die das Hinterrad (5) drehbar trägt,
eine Schwinge (14), die einen Haupt-Arm (15), der die hintere Achswelle (8) trägt, und eine Halterung (41) enthält, die von dem Haupt-Arm (15) nach oben vorsteht,
einen getragenen Körper (28), der an dem Halter (41) angebracht ist,
eine Antriebskette (32), die so eingerichtet ist, dass sie Drehung des Primärantriebs (19) auf das Hinterrad (5) überträgt,
einen Kettenspanner (34), der so eingerichtet ist, dass damit Spannung der Antriebskette (32) eingestellt wird, indem die hintere Achswelle (8) in einer Längsrichtung des Spreizsitz-Fahrzeugs (1) in Bezug auf die Schwinge (14) zwischen einer Vielzahl von Positionen bewegt wird, die eine überlappende Position und eine nicht überlappende Position einschließen,
eine Hinterradbremse (50), die zum Ausüben von abschwächender Kraft auf das Hinterrad (5) eingerichtet ist,
ein Antiblockiersystem (54), das einen Rotor (57), der so eingerichtet ist, dass er sich zusammen mit dem Hinterrad (5) dreht, und einen Radgeschwindigkeits-Sensor (58) einschließt, der so eingerichtet ist, dass er eine Drehgeschwindigkeit des Hinterrades (5) erfasst, indem er die Drehgeschwindigkeit des Rotors (57) erfasst, und das so eingerichtet ist, dass es die Dämpfkraft der Hinterradbremse (50) auf Basis der Drehgeschwindigkeit des Hinterrades (5) ändert,
einen Halter (61), der so eingerichtet ist, dass er den Radgeschwindigkeits-Sensor (58) hält, der an der hinteren Achswelle (8) angebracht ist und der so eingerichtet ist, dass er sich zusammen mit der hinteren Achswelle (8) in der Längsrichtung des Spreizsitz-Fahrzeugs (1) in Bezug auf die Schwinge (14) bewegt, sowie
ein Sensor-Befestigungselement (B2, N1), das einen Werkzeug-Passabschnitt (B2o, B2c, N1o) enthält, der an der Außenseite des Radgeschwindigkeits-Sensors (58) in einer Breitenrichtung des Spreizsitz-Fahrzeugs (1) angeordnet ist und so eingerichtet ist, dass er in Kontakt mit einem Werkzeug kommt, das zum Befestigen des Radgeschwindigkeits-Sensors (58) an dem Halter (61) eingerichtet ist,
**dadurch gekennzeichnet, dass**,
wenn sich die hintere Achswelle (8) an der überlappenden Position befindet, sich die Halterung (41) der Schwinge (14) in einer Seitenansicht des Spreizsitz-Fahrzeugs (1) mit wenigstens einem Abschnitt des Werkzeug-Passabschnitts (B2o, B2c, N1o) des Sensor-Befestigungselementes (B2, N1) überlappt, und, wenn sich die hintere Achswelle (8) an der nicht überlappenden Position befindet, sich die Halterung (41) der Schwinge (14) in einer Seitenansicht des Spreizsitz-Fahrzeugs (1) mit keinem Abschnitt des Werkzeug-Passabschnitts (B2o, B2c, N1o) des Sensor-Befestigungselementes (B2, N1) überlappt.

2. Spreizsitz-Fahrzeug (1) nach Anspruch 1, wobei
das Sensor-Befestigungselement (B2, N1) eine Schraube (B2) ist, die einen Kopf-Abschnitt (B2h), der mit dem Werkzeug-Passabschnitt (B2o, B2c) versehen ist, sowie einen Schaft-Abschnitt (B2s) einschließt, der sich von dem Kopf-Abschnitt (B2h) in der Breitenrichtung des Spreizsitz-Fahrzeugs (1) erstreckt,
wobei, wenn sich die hintere Achswelle (8) an der überlappenden Position befindet, sich die Halterung (41) der Schwinge (14) in einer Seitenansicht des Spreizsitz-Fahrzeugs (1) mit wenigstens einem Abschnitt des Kopf-Abschnitts (B2h) der Schraube (B2) überlappt, und, wenn sich die hintere Achswelle (8) an der nicht überlappenden Position befindet, sich die Halterung (41) der Schwinge (14) in einer Seitenansicht des Spreizsitz-Fahrzeugs (1) mit keinem Abschnitt des Kopf-Abschnitts (B2h) der Schraube (B2) überlappt.

3. Spreizsitz-Fahrzeug (1) nach Anspruch 1, wobei
das Sensor-Befestigungselement (N1) eine Mutter (N1) ist, die mit dem Werkzeug-Passabschnitt (N1o) versehen ist,
wobei, wenn sich die hintere Achswelle (8) an der überlappenden Position befindet, sich die Halterung (41) der Schwinge (14) in einer Seitenansicht des Spreizsitz-Fahrzeugs (1) mit wenigstens einem Abschnitt der Mutter (N1) überlappt, und, wenn sich die hintere Achswelle (8) an der nicht überlappenden Position befindet, sich die Halterung (41) der Schwinge (14) in einer Seitenansicht des Spreizsitz-Fahrzeugs (1) mit keinem Abschnitt der Mutter (N1) überlappt.

4. Spreizsitz-Fahrzeug (1) nach einem der Ansprüche 1 bis 3, wobei
der Kettenspanner (34) einen Abzieher (35) enthält, der in einer Seitenansicht des Spreizsitz-Fahrzeugs (1) sichtbar ist und der so eingerichtet ist, dass er sich zusammen mit der hinteren Achswelle (8) in der Längsrichtung des Spreizsitz-Fahrzeugs (1) in Bezug auf die Schwinge (14) bewegt, und
die Schwinge (14) eine feste Markierung (71) enthält, die als ein Bezugspunkt für eine Position des Abziehers (35) in Bezug auf die Schwinge (14) dient und die sich an einer Position der Schwinge (14) befindet, an der die hintere Achswelle (8) an der nicht überlappenden Position angeordnet ist.

5. Spreizsitz-Fahrzeug (1) nach einem der Ansprüche 1 bis 4, wobei der getragene Körper (28) an der Außenseite des Radgeschwindigkeits-Sensors (58) und der Halterung (41) in der Breitenrichtung des Spreizsitz-Fahrzeugs (1) angeordnet ist und einen unteren Endabschnitt (30a) enthält, der sich in einer Seitenansicht des Spreizsitz-Fahrzeugs (1) mit dem Radgeschwindigkeits-Sensor (58) und der Halterung (41) überlappt.

6. Spreizsitz-Fahrzeug (1) nach einem der Ansprüche 1 bis 5, wobei die Halterung (41) einen Durchdringungs-Abschnitt (43), der die Halterung (41) in der Breitenrichtung des Spreizsitz-Fahrzeugs (1) durchdringt, sowie zwei Basis-Abschnitte (42) einschließt, an denen der getragene Körper (28) angebracht ist und die vor bzw. hinter dem Durchdringungs-Abschnitt (43) angeordnet sind,
wenn sich die hintere Achswelle an der überlappenden Position befindet, sich einer der zwei Basis-Abschnitte (42) in einer Seitenansicht des Spreizsitz-Fahrzeugs(1) mit wenigstens einem Abschnitt des Werkzeug-Passabschnitts (B2o, B2c, N1o) des Sensor-Befestigungselementes (B2, N1) überlappt, und
wenn sich die hintere Achswelle an der nicht überlappenden Position befindet, sich der Durchdringungs-Abschnitt (43) in einer Seitenansicht des Spreizsitz-Fahrzeugs (1) mit jedem beliebigen Abschnitt des Werkzeug-Passabschnitts (B2o, B2c, N1o) des Sensor-Befestigungselementes (B2, N1) überlappt.

7. Spreizsitz-Fahrzeug (1) nach Anspruch 6, wobei der Durchdringungs-Abschnitt (43) der Halterung (41) eine Einkerbung ist, die sich in einer Seitenansicht des Spreizsitz-Fahrzeugs (1) nach oben öffnet.

8. Spreizsitz-Fahrzeug (1) nach einem der Ansprüche 1 bis 7, wobei der Radgeschwindigkeits-Sensor (58) einen Sensor-Kopf (66a) enthält, der von dem Halter (61) in der Breitenrichtung des Spreizsitz-Fahrzeugs (1) nach innen vorsteht und der dem Rotor (57) zugewandt ist, und
der Sensor-Kopf (66a) hinter dem Halter (61) angeordnet ist und sich, bei Sicht auf den Radgeschwindigkeits-Sensor (58) von hinten, mit dem Halter (61) überlappt.

9. Spreizsitz-Fahrzeug (1) nach einem der Ansprüche 1 bis 8, wobei
das Hinterrad (5) ein Rad (7) und einen Reifen (6) enthält,
das Rad (7) eine zylindrische Nabe (7a), an der die hintere Achswelle (8) angebracht ist, eine ringförmige Felge (7c), an der der Reifen (6) angebracht ist, sowie eine Vielzahl von Speichen (7b) enthält, die sich von der Nabe (7a) zu der Felge (7c) erstrecken,
der Radgeschwindigkeits-Sensor (58) einen Sensor-Kopf (66a) enthält, der von dem Halter (61) in der Breitenrichtung des Spreizsitz-Fahrzeugs (1) nach innen vorsteht und der dem Rotor (57) zugewandt ist, und
der Sensor-Kopf (66a) oberhalb der Nabe (7a) angeordnet ist und sich, bei Sicht auf den Radgeschwindigkeits-Sensor (58) von oben, mit der Nabe (7a) überlappt.

10. Spreizsitz-Fahrzeug (1) nach einem der Ansprüche 1 bis 9, wobei die Hinterradbremse (50) eine Scheibenbremse ist, die eine Bremsscheibe (51), die so eingerichtet ist, dass sie sich zusammen mit dem Hinterrad (5) dreht, einen Bremsbelag (52), der an die Bremsscheibe (51) gedrückt wird, sowie einen Bremssattel (53) enthält, der so eingerichtet ist, dass er den Bremsbelag (52) hält, und
der Halter (61) einen Sensor-Halteabschnitt, der so eingerichtet ist, dass er den Radgeschwindigkeits-Sensor (58) hält, sowie einen Bremssattel-Halteabschnitt (61a) enthält, der so eingerichtet ist, dass er den Bremssattel (53) hält.

11. Spreizsitz-Fahrzeug (1) nach Anspruch 10, wobei der Rotor (57) des Antiblockiersystems (54) einen Außendurchmesser hat, der kleiner ist als der Außendurchmesser der Bremsscheibe (51).

12. Spreizsitz-Fahrzeug (1) nach einem der Ansprüche 1 bis 11, wobei der Radgeschwindigkeits-Sensor (58) und das Sensor-Befestigungselement (B2, N1) an einer der Antriebskette (32) in Bezug auf das Hinterrad (5) gegenüberliegenden Seite angeordnet sind.

13. Spreizsitz-Fahrzeug (1) nach einem der Ansprüche 1 bis 12, wobei die Schwinge (14) ein Paar Haupt-Arme (15) enthält, die an der rechten bzw. der linken Seite des Hinterrades (5) angeordnet sind.

## Revendications

1. Véhicule à enfourcher (1) comportant :
une roue arrière (5),
un appareil moteur (19) qui est configuré pour faire tourner la roue arrière (5),
un arbre d'essieu arrière (8) qui supporte la roue arrière (5) de manière rotative,
un bras oscillant (14) qui comprend un bras principal (15) supportant l'arbre d'essieu arrière (8) et un support (41) faisant saillie vers le haut à partir du bras principal (15),
un corps supporté (28) monté sur le support (41),
une chaîne de transmission (32) qui est configurée pour transmettre la rotation de l'appareil moteur (19) à la roue arrière (5),
un tendeur de chaîne (34) qui est configuré pour ajuster la tension de la chaîne de transmission (43) en déplaçant l'arbre d'essieu arrière (8) dans une direction avant/arrière du véhicule à enfourcher (1) par rapport au bras oscillant (14) entre une pluralité de positions comprenant une position de superposition et une position de non superposition,
un frein arrière (50) qui est configuré pour appliquer une force d'amortissement à la roue arrière (5),
un ABS (54) qui comprend un rotor (57) qui est configuré pour tourner conjointement avec la roue arrière (5) et un capteur de vitesse de roue (58) qui est configuré pour détecter une vitesse de rotation de la roue arrière (5) en détectant la vitesse de rotation du rotor (57), et qui est configuré pour changer la force d'amortissement du frein arrière (50) en se fondant sur la vitesse de rotation de la roue arrière (5),
un élément de maintien (61) qui est configuré pour porter le capteur de vitesse de roue (58), est monté sur l'arbre d'essieu arrière (8), et qui est configuré pour se déplacer dans la direction avant/arrière du véhicule à enfourcher (1) par rapport au bras oscillant (14) conjointement avec l'arbre d'essieu arrière (8), et
un élément de fixation de capteur (B2, N1) qui comprend une partie adaptée à un outil (B2o, B2c, N1o) disposée sur le côté extérieur du capteur de vitesse de roue (58) dans une direction de la largeur du véhicule à enfourcher (1) et configurée pour entrer en contact avec un outil qui est configuré pour fixer le capteur de vitesse de roue (58) sur l'élément de maintien (61),
**caractérisé en ce que**
lorsque l'arbre d'essieu arrière (8) se trouve dans la position de superposition, le support (41) du bras oscillant (14) se superpose à au moins une partie de la partie adaptée à l'outil (B2o, B2c, N1o) de l'élément de fixation de capteur (B2, N1) dans une vue latérale du véhicule à enfourcher (1), et lorsque l'arbre d'essieu arrière (8) se trouve dans la position de non superposition, le support (41) du bras oscillant (14) ne se superpose à aucune partie de la partie adaptée à l'outil (B2o, B2c, N1o) de l'élément de fixation de capteur (B2, N1) dans une vue latérale du véhicule à enfourcher (1).

2. Véhicule à enfourcher (1) selon la revendication 1, où
l'élément de fixation de capteur (B2, N1) est un boulon (B2) comprenant une partie de tête (B2h) munie de la partie adaptée à l'outil (B2o, B2c) et une partie de tige (B2s) s'étendant de la partie de tête (B2h) dans la direction de la largeur du véhicule à enfourcher (1),
où lorsque l'arbre d'essieu arrière (8) se trouve dans la position de superposition, le support (41) du bras oscillant (14) se superpose à au moins une partie de la partie de tête (B2h) du boulon (B2) dans une vue latérale du véhicule à enfourcher (1), et lorsque l'arbre d'essieu arrière (8) se trouve dans la position non superposée, le support (41) du bras oscillant (14) ne se superpose à aucune partie de la partie de tête (B2h) du boulon (B2) dans une vue latérale du véhicule à enfourcher (1).

3. Véhicule à enfourcher (1) selon la revendication 1, où
l'élément de fixation de capteur (N2) est un écrou (N1) muni de la partie adaptée à l'outil (N1a),
où lorsque l'arbre d'essieu arrière (8) se trouve dans la position de superposition, le support (41) du bras oscillant (14) se superpose à au moins une partie de l'écrou (N1) dans une vue latérale du véhicule à enfourcher (1), et lorsque l'arbre d'essieu arrière (8) se trouve dans la position non superposée, le support (41) du bras oscillant (14) ne se superpose à aucune partie de l'écrou (N1) dans une vue latérale du véhicule à enfourcher (1).

4. Véhicule à enfourcher (1) selon l'une quelconque des revendications 1 à 3, où
le tendeur de chaîne (34) comprend un élément de traction (35) qui est visible dans une vue latérale du véhicule à enfourcher (1) et qui est configuré pour se déplacer dans une direction avant-arrière du véhicule à enfourcher (1) par rapport au bras oscillant (14) conjointement avec l'arbre d'essieu arrière (8) et
le bras oscillant (14) comprend un marquage fixe (71) qui sert de référence pour la position de l'élément de traction (35) par rapport au bras oscillant (14) et qui est disposé à un endroit du bras oscillant (14) où l'arbre d'essieu arrière (8) se trouve dans la position de non superposition.

5. Véhicule à enfourcher (1) selon l'une quelconque des revendications 1 à 4, où le corps supporté (28) est disposé sur le côté extérieur du capteur de vitesse de roue (58) et du support (41) dans la direction de la largeur du véhicule à enfourcher (1), et comprend une partie d'extrémité inférieure (30a) qui se superpose au capteur de vitesse de roue (58) et au support (41) dans une vue latérale du véhicule à enfourcher (1).

6. Véhicule à enfourcher (1) selon l'une quelconque des revendications 1 à 5, où le support (41) comprend une partie de pénétration (43) qui pénètre dans le support (41) dans la direction de la largeur du véhicule à enfourcher (1), et deux parties de base (42) sur lesquelles est monté le corps supporté (28) et disposées respectivement devant et derrière la partie de pénétration (43),
lorsque l'arbre d'essieu arrière (8) se trouve dans la position de superposition, une des deux parties de base (42) se superpose à au moins une partie de la partie adapté à l'outil (B2o, B2c, N1o) de l'élément de fixation de capteur (B2, N1) dans une vue latérale du véhicule à enfourcher (1), et
lorsque l'arbre d'essieu arrière (8) se trouve dans la position de non superposition, la partie de pénétration (43) se superpose à une partie de la partie adapté à l'outil (B2o, B2c, N1o) de l'élément de fixation de capteur (B2, N1) dans une vue latérale du véhicule à enfourcher (1).

7. Véhicule à enfourcher (1) selon la revendication 6, où la partie de pénétration (43) du support (41) est une encoche ouverte vers le haut dans une vue latérale du véhicule à enfourcher (1).

8. Véhicule à enfourcher (1) selon l'une quelconque des revendications 1 à 7, où le capteur de vitesse de roue (58) comprend une tête de capteur (66a) qui fait saillie vers l'intérieur depuis l'élément de maintien (61) dans la direction de la largeur du véhicule à enfourcher (1) et qui fait face au rotor (57), et
la tête de capteur (66a) est disposée derrière l'élément de maintien (61) et se superpose à l'élément de maintien (61) dans une vue arrière du capteur de vitesse de roue (58).

9. Véhicule à enfourcher (1) selon l'une quelconque des revendications 1 à 8, où
la roue arrière (5) comprend une roue (7) et un pneu (6),
la roue (7) comprend un moyeu cylindrique (7a) sur lequel est monté l'arbre d'essieu arrière (9), une jante annulaire (7c) sur lequel est monté le pneu (6) et une pluralité de rayons (7b) s'étendant du moyeu (7a) à la jante (7c),
le capteur de vitesse de roue (58) comprend une tête de capteur (66a) qui fait saillie vers l'intérieur depuis l'élément de maintien (61) dans la direction de la largeur du véhicule à enfourcher (1) et qui fait face au rotor (57), et
la tête de capteur (66a) est disposée au-dessus du moyeu (7a) et se superpose au moyeu (7a) dans une vue d'en haut du capteur de vitesse de roue (58).

10. Véhicule à enfourcher (1) selon l'une quelconque des revendications 1 à 9, où le frein arrière (50) est un frein à disque comprenant un disque de frein (51) qui est configuré pour tourner conjointement avec la roue arrière (5), une plaquette de frein (52) qui est pressée contre le disque de frein (51), et un étrier de frein (53) qui est configuré pour porter la plaquette de frein (52), et
l'élément de maintien (61) comprend une partie de maintien de capteur qui est configurée pour porter le capteur de vitesse de roue (58) et une partie de maintien d'étrier (61a) qui est configurée pour porter l'étrier de frein (53).

11. Véhicule à enfourcher (1) selon la revendication 10, où le rotor (57) de l'ABS (54) présente un diamètre extérieur qui est inférieur au diamètre extérieur du disque de frein (51).

12. Véhicule à enfourcher (1) selon l'une quelconque des revendications 1 à 11, où le capteur de vitesse de roue (58) et l'élément de fixation de capteur (B2, N1) sont disposés sur un côté opposé à la chaîne de transmission (32) par rapport la roue arrière (5).

13. Véhicule à enfourcher (1) selon l'une quelconque des revendications 1 à 12, où le bras oscillant (14) comprend une paire de bras principaux (15) disposés respectivement sur les côtés droit et gauche de la roue arrière (5).
